# EUROPEAN PATENT APPLICATION

(11) **EP 3 567 494 A1**
(43) Date of publication of application: **13.11.2019**
(21) Application number: 19173086.0
(22) Date of filing: 07.05.2019
(51) Int. Cl.: G06F 16/9535, G06F 16/957

(54) **METHODS AND SYSTEMS FOR IDENTIFYING, SELECTING, AND PRESENTING MEDIA-CONTENT ITEMS RELATED TO A COMMON STORY**

(30) Priority: 07.05.2018 US 201862668241 P; 07.05.2018 US 201862668230 P
(71) Applicant: Google LLC, Mountain View, CA 94043 (US)
(72) Inventor: Vidhya, Ramesh Bhat, Mountain View, CA California 94043 (US); Ziad, Sultan, Mountain View, CA California 94043 (US)
(74) Representative: Colonna, Matthew Oliver

(57) **Abstract**

The present disclosure is directed to identifying, selecting, and presenting media-content items related to a common story. In particular, the methods and systems of the present disclosure can: determine a label for a media-content item at least a portion of which is being presented by a user device; identify a plurality of different media-content items related to a story described by the label; select, from amongst the plurality of different media-content items, multiple different media-content items that provide an objective curation of diverse content related to the story; generate data describing one or more interfaces comprising at least a portion of each of the multiple different media-content items; and communicate, to the user device, the data describing the interface(s).

## Description

### PRIORITY CLAIM

This application claims priority to: U.S. Patent Application Serial No. 62/668,230, filed May 7, 2018, and entitled "METHODS AND SYSTEMS FOR IDENTIFYING, SELECTING, AND PRESENTING MEDIA-CONTENT ITEMS RELATED TO A COMMON STORY," the disclosure of which is incorporated by reference herein in its entirety; and U.S. Patent Application Serial No. 62/668,241, filed May 7, 2018, and entitled "SYSTEMS AND METHODS FOR PRESENTATION OF CONTENT ITEMS RELATING TO A TOPIC," the disclosure of which is incorporated by reference herein in its entirety.

### FIELD

The present disclosure relates generally to identifying, selecting, and presenting media-content items. More particularly, the present disclosure relates to identifying, selecting, and presenting media-content items related to a common story.

### BACKGROUND

A wide variety of digital media content is available to consumers, for example, via the Internet. The sheer volume of content available, however, presents challenges. For example, much of the available content is duplicative, cumulative, redundant, and/or the like. Additionally, available content can be difficult for a consumer to navigate, for example, because often the content is not structured in an interrelated manner. Moreover, many approaches to navigating content suggest additional content for consumption based on content that a user has recently or historically consumed, which can fail to provide the consumer with a diversity of perspectives.

### SUMMARY

Aspects and advantages of embodiments of the present disclosure will be set forth in part in the following description, or can be learned from the description, or can be learned through practice of the embodiments.

One example aspect of the present disclosure is directed to a computer-implemented method. The method can include determining, by one or more computing devices, a label for a media-content item at least a portion of which is being presented by a user device. The label can describe a story that is a subject of the media-content item. The method can also include identifying, by the computing device(s), a plurality of different media-content items related to the story. The method can further include selecting, by the computing device(s) and from amongst the plurality of different media-content items, multiple different media-content items that provide an objective curation of diverse content related to the story. The multiple different media-content items can comprise a plurality of different types of content and/or a plurality of different types of media. The method can further include generating, by the computing device(s), data describing one or more interfaces comprising at least a portion of each of the multiple different media-content items. The method can further include communicating, by the computing device(s) and to the user device, the data describing the interface(s).

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
**FIG. 1** depicts an example computing environment according to example embodiments of the present disclosure;
**FIGs. 2A** and **2B** depict an example event sequence according to example embodiments of the present disclosure;

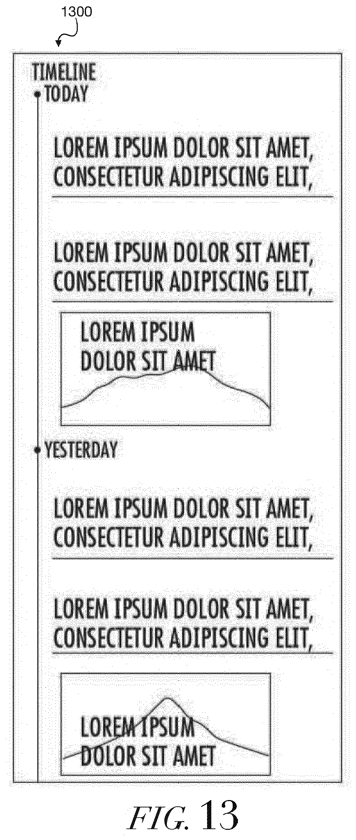

**FIGs. 3-28** depict example interfaces according to example embodiments of the present disclosure; and
**FIG. 29** depicts an example method according to example embodiments of the present disclosure.

### DETAILED DESCRIPTION

Example aspects of the present disclosure are directed to identifying, selecting, and presenting media-content items related to a common story. In particular, a computing system (e.g., one or more computing devices, and/or the like) can determine a label for a media-content item at least a portion of which is being presented by a user device (e.g., a mobile computing device, and/or the like). The label can describe a story that is the subject of the media-content item. The computing system can identify different media-content items related to the story and can select, from amongst such items, multiple different media-content items that provide an objective curation of diverse content related to the story. The multiple different media-content items can include multiple different types of content and multiple different types of media. The computing system can generate data describing one or more interfaces including at least a portion of each of the multiple different media-content items and can communicate such data to the user device. For example, the data describing the interface(s) can be or include instructions for rendering the interface(s) on a display device, and/or the like.

The methods and systems described herein can provide a number of technical effects and benefits. For example, the methods and systems described herein can conserve computing resources (e.g., network resources, power resources, and/or the like) by enabling a user to identify and peruse media-content items more efficiently, for example, by obviating the need to manually perform one or more searches, review media-content items from various different providers, and/or the like.

With reference now to the Figures, example embodiments of the present disclosure will be discussed in further detail.

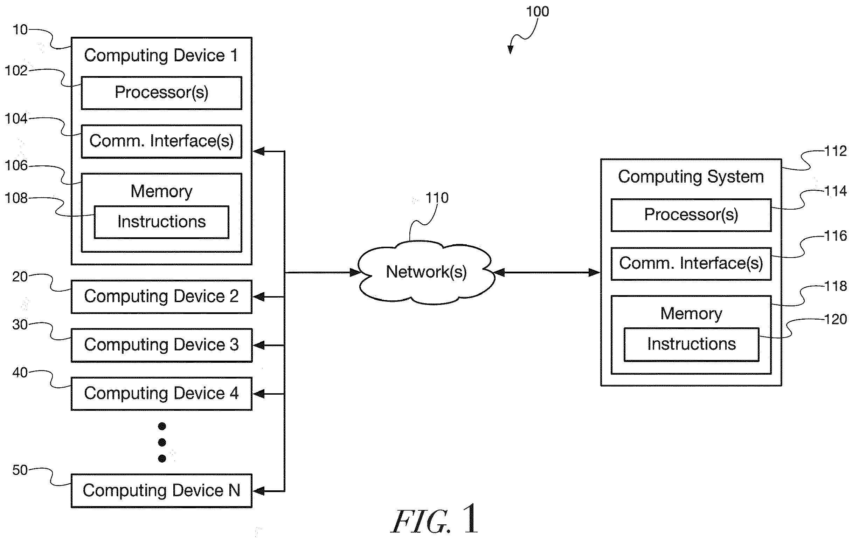

**FIG. 1** depicts an example computing environment according to example embodiments of the present disclosure.

Referring to **FIG. 1****,** environment **100** can include one or more computing devices (e.g., one or more desktop computers, laptop computers, tablet computers, mobile devices, smartphones, servers, and/or the like). For example, environment **100** can include computing devices **10, 20, 30, 40,** and **50** and computing system **112,** which can include one or more computing devices. Environment **100** can also include one or more networks **110** (e.g., one or more wired networks, wireless networks, and/or the like). Network(s) **110** can interface computing devices **10, 20, 30, 40,** and/or **50** with one another and/or with computing system **112.**

Computing device **10** can include one or more processor(s) **102,** one or more communication interfaces **104,** and memory **106** (e.g., one or more hardware components for storing executable instructions, data, and/or the like). Communication interface(s) **104** can enable computing device **10** to communicate with computing devices **20, 30, 40,** and/or **50** and/or with computing system **112.** Memory **106** can include (e.g., store, and/or the like) instructions **108.** When executed by processor(s) **102,** instructions **108** can cause computing device **10** to perform one or more operations, functions, and/or the like described herein. It will be appreciated that computing devices **20, 30, 40,** and/or **50** can include one or more of the components described above with respect to computing device **10.**

Computing system **112** can include one or more processor(s) **114,** one or more communication interfaces **116,** and memory **118** (e.g., one or more hardware components for storing executable instructions, data, and/or the like). Communication interface(s) **116** can enable computing system **112** to communicate with computing devices **10, 20, 30, 40,** and/or **50.** Memory **118** can include (e.g., store, and/or the like) instructions **120.** When executed by processor(s) **114,** instructions **120** can cause computing system **112** to perform one or more operations, functions, and/or the like described herein.

Unless explicitly indicated otherwise, the operations, functions, and/or the like described herein can be performed by computing devices **10, 20, 30, 40,** and/or **50** and/or computing system **112** (e.g., by computing device **10, 20, 30, 40,** or **50,** by computing system **112,** by a combination of computing devices **10, 20, 30, 40,** and/or **50** and/or computing system **112,** and/or the like).

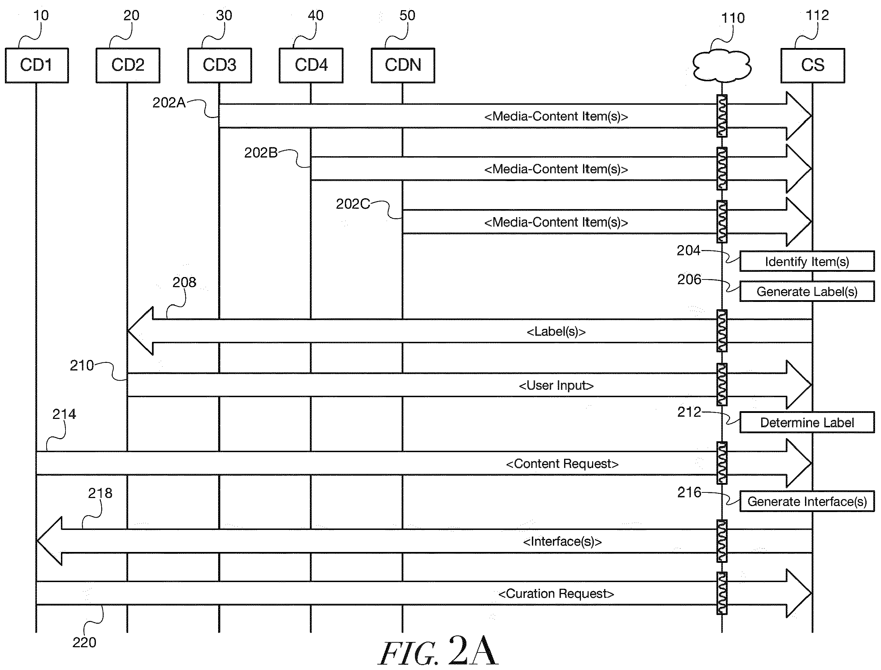

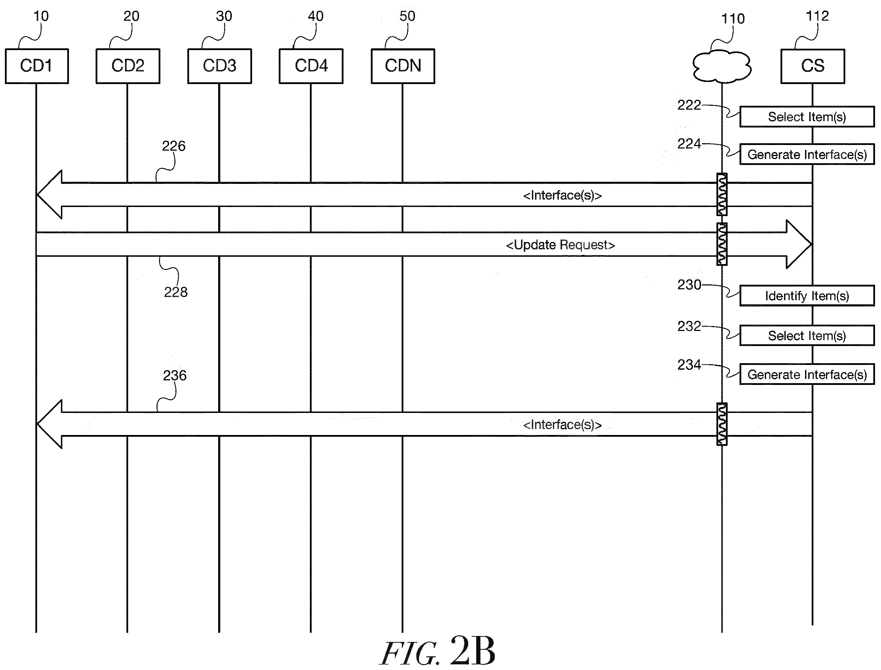

**FIGs. 2A** and **2B** depict an example event sequence according to example embodiments of the present disclosure.

Referring to FIG. **2A****,** at (**202**), computing system **112** can receive data representing various media-content items. For example, at (**202A**), computing device **30** can communicate (e.g., via network(s) **110,** as indicated by the pattern-filled box over the line extending downward from network(s) **110,** and/or the like) data representing one or more media-content items to computing system **112,** which can receive the data representing the media-content item(s). Similarly, at (**202B**), computing device **40** can communicate data representing one or more media-content items to computing system **112,** which can receive the data representing the media-content item(s); and, at (**202C**), computing device **50** can communicate data representing one or more media-content items to computing system **112,** which can receive the data representing the media-content item(s). For example, computing devices **30, 40,** and/or **50** can be associated with one or more media-content publishers, creators, hosting platforms, and/or the like, and computing devices **30, 40,** and/or **50** can communicate the data representing the various media-content items when the media-content items become available, periodically, in response to one or more requests from computing system **112,** and/or the like.

At (**204**), computing system **112** can identify, from amongst the various media-content items represented by the data communicated at (**202**), a plurality of different media-content items related to a story that is a subject of each of the plurality of different media-content items (e.g., a common story addressed by each of the plurality of different media-content items, and/or the like). For example, computing system **112** can utilize one or more natural language understanding (NLU) algorithms, speech-recognition algorithms, optical character recognition (OCR) algorithms, and/or the like to process content of the various media-content items in order to identify the plurality of different media-content items related to the story.

At (**206**), computing system **112** can generate one or more candidate labels for describing the story, the plurality of different media-content items related to the story, and/or the like. For example, computing system **112** can utilize one or more NLU algorithms, speech-recognition algorithms, OCR algorithms, and/or the like to process content of the plurality of different media-content items related to the story and can generate the candidate label(s) based at least in part on the processed content. In some embodiments, computing system **112** can aggregate, from amongst a plurality of different historical search queries by users (e.g., queries previously processed by computing system **112,** and/or the like), queries that map to media-content items included in the plurality of different media-content items related to the story. In some of such embodiments, computing system **112** can determine one or more terms included in the queries that map to the media-content items; and computing system **112** can generate (e.g., construct, and/or the like) one or more of the candidate label(s) based at least in part on the term(s) included in the queries that map to the media-content items. Additionally or alternatively, computing system **112** can process the plurality of different media-content items related to the story to identify one or more generic sentences (e.g., one or more sentences with similar, analogous, and/or the like components, structures, and/or the like) included in multiple of the plurality of different media-content items; computing system **112** can determine one or more terms included in the generic sentence(s); and computing system **112** can generate (e.g., construct, and/or the like) one or more of the candidate label(s) based at least in part on the term(s) included in the generic sentence(s).

At (**208**), computing system **112** can communicate data indicating the candidate label(s) to computing device **20,** which can receive the data indicating the candidate label(s). At (**210**), computing device **20** can communicate data indicating user input regarding one or more of the candidate label(s) to computing system **112,** which can receive the data indicating the user input. For example, computing device **20** can be associated with one or more human operators tasked with reviewing candidate labels and indicating one or more of the candidate labels that conform with one or more predetermined requirements for labels describing stories, and/or the like; the human operator(s) can review the candidate label(s) generated by computing system **112** and can provide (e.g., via computing device **20,** and/or the like) user input indicating one or more of the candidate label(s) that conform with such predetermined requirement(s); and computing device **20** can communicate data indicating the user input to computing system **112,** which can receive the data indicating the user input.

At (**212**), computing system **112** can determine a label for describing the story that is the subject of each of the plurality of different media-content items, the plurality of different media-content items related to the story, and/or the like. For example, computing system **112** can determine the label by selecting (e.g., based at least in part on the data indicating the user input, and/or the like) the label from amongst the candidate label(s), and/or the like.

At (**214**), computing device **10** can communicate data indicating a request for one or more media-content items of the plurality of different media-content items to computing system **112,** which can receive the data indicating the request. For example, computing device **10** can comprise a user device being utilized by a consumer of digital media content, the consumer can utilize computing device **10** to request the media-content item(s), and computing device **10** can communicate data indicating the request to computing system **112,** which can receive the data indicating the request.

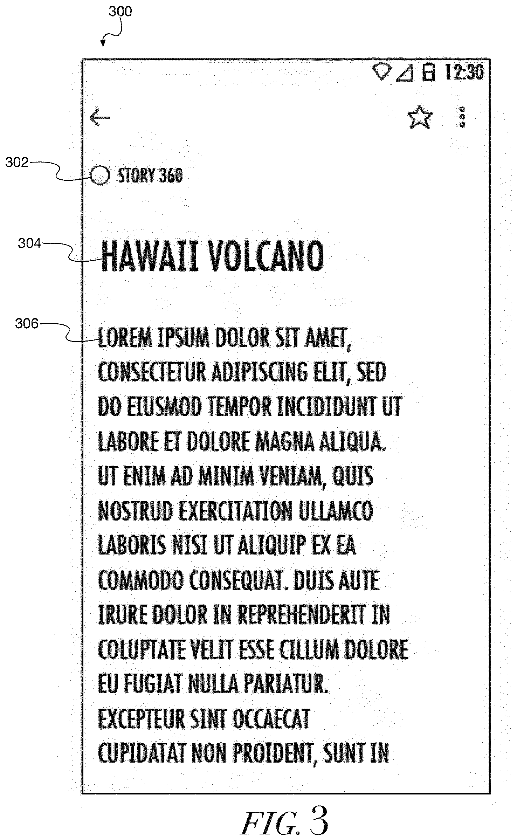

At (**216**), computing system **112** can generate data describing one or more interfaces comprising at least a portion of the requested media-content item(s). For example, referring to **FIG. 3****,** computing system **112** can generate data describing interface **300.** Interface **300** can include element **306** presenting at least a portion of the requested media-content item(s). Interface **300** can also include element **304** comprising the label determined at **(212)** describing the story that is a subject of the at least a portion of the media-content item(s) presented by element **306.** In accordance with aspects of the subject matter described herein, interface **300** can further include element **302,** which can comprise a user-invokable option for requesting an objective curation of diverse content related to the story described by the label of element **304.** Such a user-invokable option can be presented (e.g., as part of one or more interfaces, and/or the like) in response to a user performing a search (e.g., that identifies one or more results associated with the determined label, and/or the like), as part of an aggregation of media-content item(s) (e.g., including one or more media-content items associated with the determined label, and/or the like), as an addendum (e.g., "read more about," "explore," and/or the like) to an interface (e.g., interface **300,** and/or the like) associated with one or more of the requested media-content item(s), and/or the like.

Returning to **FIG. 2A****,** at (**218**), computing system **112** can communicate the data describing the interface(s) (e.g., interface **300,** and/or the like) to computing device **10,** which can receive the data describing the interface(s) and can utilize such data to render (e.g., for display, and/or the like) the interface(s) for presentation (e.g., of the requested media-content item(s), and/or the like) to the consumer. For example, the data describing the interface(s) can be or include instructions for rendering the interface(s) on a display of computing device **10,** and/or the like.

At (**220**), computing device **10** can communicate data indicating invocation of a user-invokable option for requesting an objective curation of diverse content related to the story to computing system **112,** which can receive the data indicating invocation of the user-invokable option. For example, the consumer utilizing computing device **10** can invoke the user-invokable option of element **302,** and computing device **10** can communicate data indicating invocation of the user-invokable option of element **302** to computing system **112,** which can receive such data.

Referring to **FIG. 2B****,** at (**222**), computing system **112** can select, from amongst the plurality of different media-content items related to the story, multiple different media-content items that provide an objective curation of diverse content related to the story. In some embodiments, such selection can be configured to include: at least one media-content item comprising objectively verifiable factual reporting related to the story; and at least two media-content items comprising editorial content about one or more aspects of the story reflecting differing opinions with respect to such aspect(s), and thereby, for example, provide an objective curation of diverse content related to the story. The multiple different media-content items can include a plurality of different types of content. For example, the multiple different media-content items can include factual content, analytical content, editorial content, primary-source content, and/or the like. Additionally or alternatively, the multiple different media-content items can include a plurality of different types of media. For example, the multiple different media-content items can include one or more written articles, audio segments, video segments, online-blog entries, portions of social-media content, and/or the like.

At (**224**), computing system **112** can generate data describing one or more interfaces comprising at least a portion of each of the multiple different media-content items.

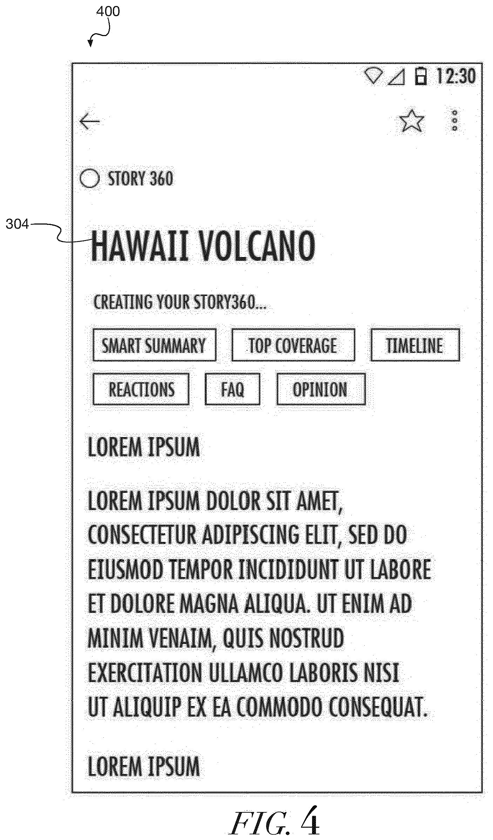

In some embodiments, the interface(s) can include an interface indicating that the objective curation of diverse content associated with the story described by the label of element **304** is being generated. For example, referring to **FIG. 4****,** computing system **112** can generate data describing interface **400.**

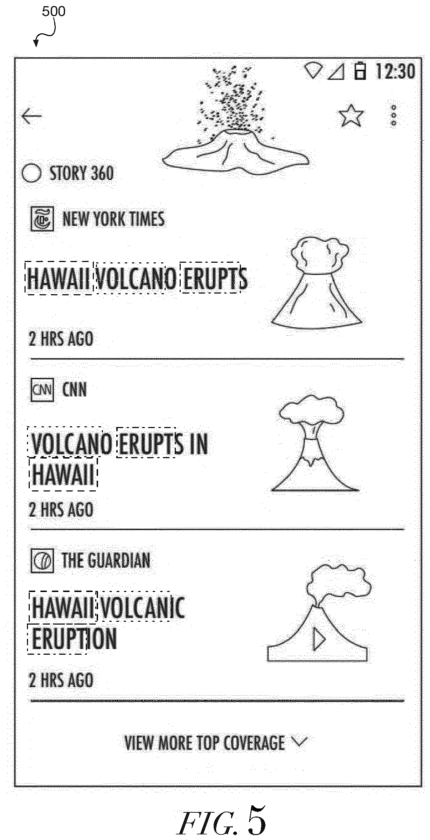

In some embodiments, the interface(s) can include an interface that highlights or otherwise identifies, distinguishes, and/or the like common keywords, elements, and/or the like associated with the story described by the label of element **304.** Such keywords, elements, and/or the like can be determined, selected, identified, and/or the like based at least in part on their association with the story described by the label of element **304** (e.g., they can be selected from one or more media-content items for which the label was determined, generated, and/or the like based at least in part on a frequency, prominence, and/or the like with which they are included in such item(s), identified based at least in part on the user input communicated at (**210**), and/or the like). For example, referring to **FIG. 5****,** computing system **112** can generate data describing interface **500,** which can include elements (e.g., highlighting, outlining, and/or the like) identifying common keywords (e.g., Hawaii, volcano, erupt, and/or the like) associated with the story described by the label of element **304.**

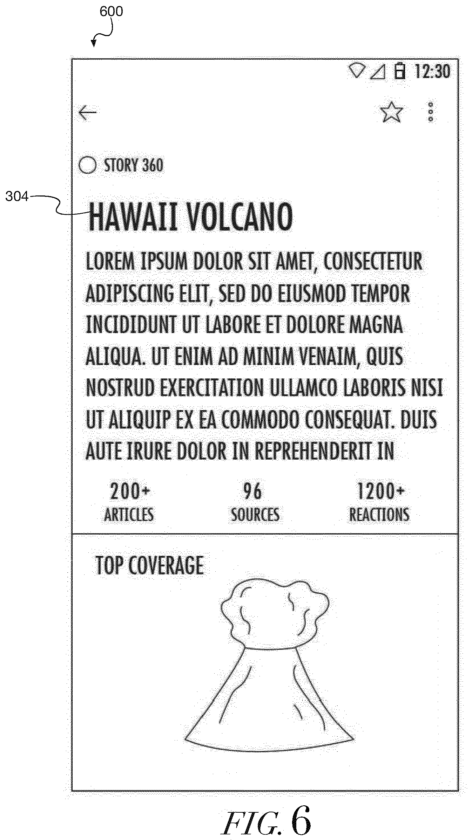

In some embodiments, the interface(s) can include an interface that summarizes the story described by the label of element **304.** For example, referring to **FIG. 6****,** computing system **112** can generate data describing interface **600,** which can, for example, provide a synopsis of the story described by the label of element **304,** describe, characterize, summarize, or otherwise indicate (e.g., tally, total, and/or the like, for example, by source, provider, prominence, popularity, social-media reaction, and/or the like) one or more available, identified, and/or the like media-content items associated with the story described by the label of element **304,** one or more people, organizations, entities, and/or the like that are the subject of, affiliated with, identified by, and/or the like the story described by the label of element **304,** social-media reaction to the story described by the label of element **304,** and/or the like.

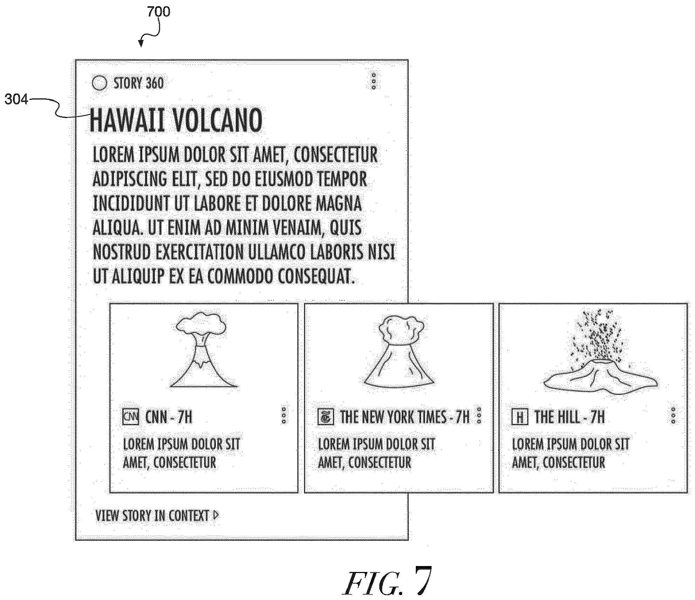

In some embodiments, the interface(s) can include an interface that includes media-content items that place the story described by the label of element **304** in context (e.g., by identifying, summarizing, indicating, and/or the like one or more other media-content items that provide historical, background, and/or the like information related to development of the story, and/or the like). For example, referring to **FIG. 7****,** computing system **112** can generate data describing interface **700,** which can include elements (e.g., as part of a carousel interface, as illustrated, and/or the like) associated with various media-content items that provide historical, background, and/or the like information related to development of the story described by the label of element **304,** and/or the like.

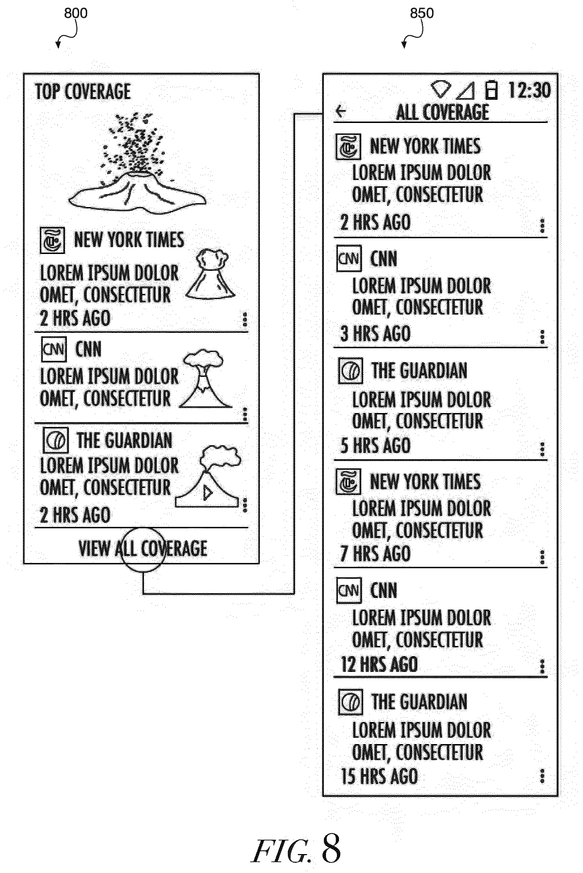

In some embodiments, the interface(s) can include an interface that includes popular media-content items associated with the story described by the label of element **304.** For example, referring to **FIG. 8****,** computing system **112** can generate data describing interface **800,** which can include elements corresponding to the most frequently viewed media-content items associated with the story described by the label of element **304,** and/or the like.

In some embodiments, the interface(s) can include an interface that includes all media-content items associated with the story described by the label of element **304.** For example, computing system **112** can generate data describing interface **850.**

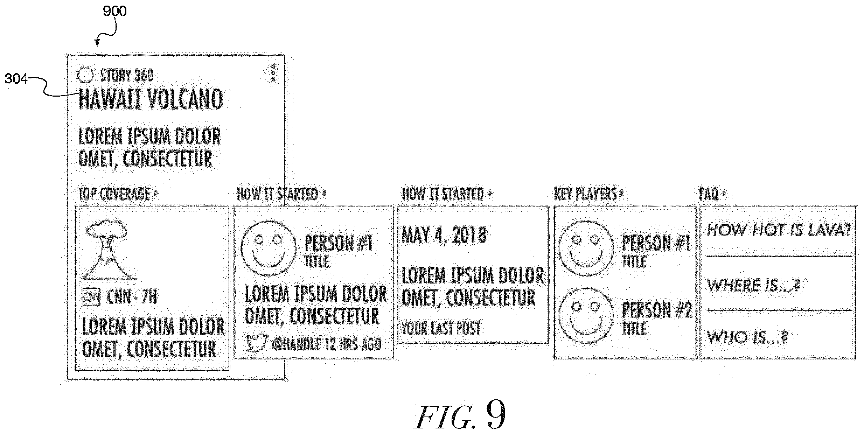

In some embodiments, the interface(s) can include an interface that provides access to media-content items related to various aspects of the story described by the label of element **304.** For example, referring to **FIGs. 9****,** **10****,** and **11****,** computing system **112** can generate data describing interfaces **900, 1000,** and/or **1100.**

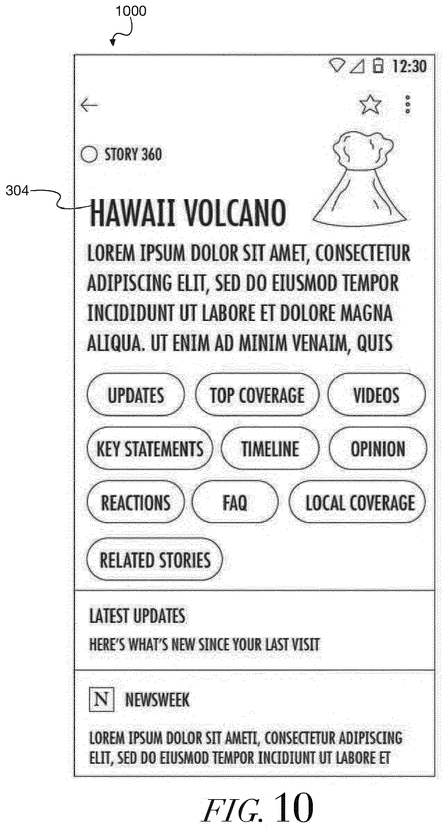

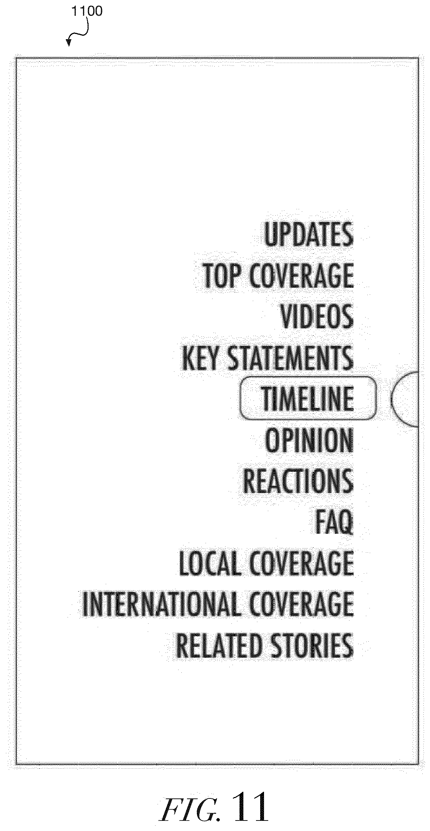

Referring to **FIG. 9****,** interface **900** can include elements corresponding to multiple media-content items associated with the story described by the label of element **304** (e.g., as part of a carousel interface, and/or the like). Similarly, referring to **FIG. 10****,** interface **1000** can include elements corresponding to multiple media-content items associated with the story described by the label of element **304;** and referring to **FIG. 11****,** interface **1100** can include elements corresponding to various menu options for browsing different categories of media-content items associated with the story described by the label of element **304.**

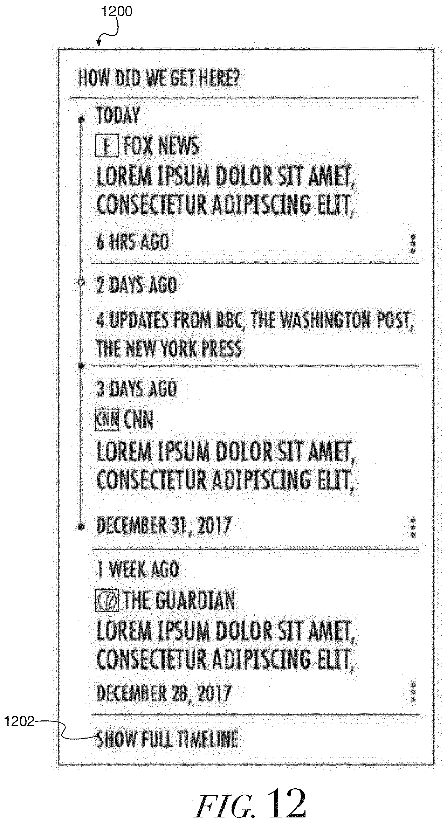

In some embodiments, the interface(s) can include an interface that depicts a timeline comprising portions of one or more media-content items that are related to the subject of the media-content item and provide historical background for the story. For example, referring to **FIG. 12****,** computing system **112** can generate data describing interface **1200.** As illustrated, interface **1200** can depict a timeline comprising portions of one or more media-content items that are related to the subject of the story described by the label of element **304.** In some embodiments, the historical background can include multiple different events, and the timeline can include multiple milestones, wherein each of the milestones corresponds to a different event of the multiple different events. For example, such events can be identified based at least in part on their correspondence with the contemporaneous publication, release, availability, and/or the like of an increased volume of content related to the story described by the label of element **304.** In some of such embodiments, for each of the multiple different events, computing system **112** can determine to include a milestone for the event in the timeline based at least in part on a metric indicating an importance of the event to the historical background (e.g., based at least in part on a measure of volume of contemporaneous related content, and/or the like) and/or a metric indicating relevance of the event to the story (e.g., based at least in part on a measure of frequency with which related media-content times are cited, linked to, and/or the like by other media-content items related to the story, and/or the like).

In some embodiments, for each of one or more of the multiple different events, computing system **112** can determine (e.g., based at least in part on the metric indicating the importance of the event to the historical background, the metric indicating relevance of the event to the story, and/or the like) that the event is unimportant relative to one or more other events of the multiple different events. In some of such embodiments, the timeline can include a collapsed portion including one or more milestones corresponding to such event(s). Such a collapsed portion can be configured to expand to depict milestone(s) corresponding to such event(s) in response to user input. For example, responsive to a user invoking an option corresponding to element **1202,** computing system **112** can generate data describing interface **1300.** In some embodiments, for each of such event(s), computing system **112** can determine (e.g., based at least in part on the metric indicating the importance of the event to the historical background, the metric indicating relevance of the event to the story, and/or the like) an importance of the event relative to one or more other events of the plurality of different events. In some of such embodiments, computing system **112** can, for one or more of such event(s), in order to distinguish such event(s) from the one or more other events depicted by the timeline, determine a type of media for one or more media-content items at least a portion of which is included in the timeline for such event(s), a prominence of one or more aspects of such media-content item(s) which is included in the timeline for the event, and/or the like.

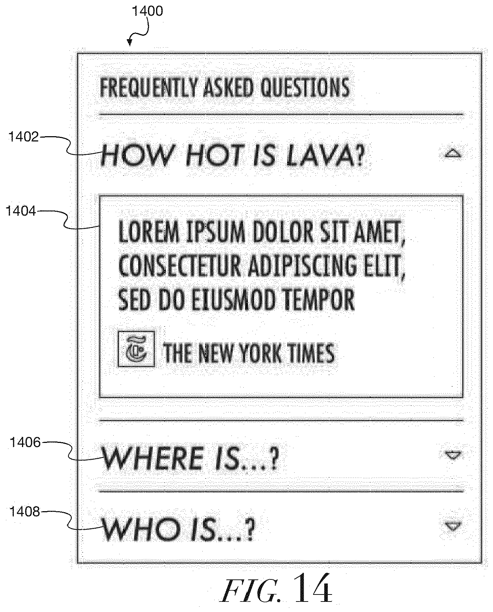

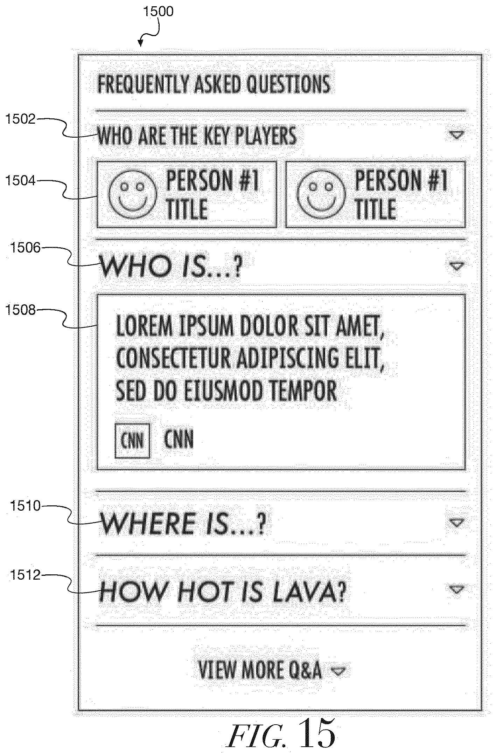

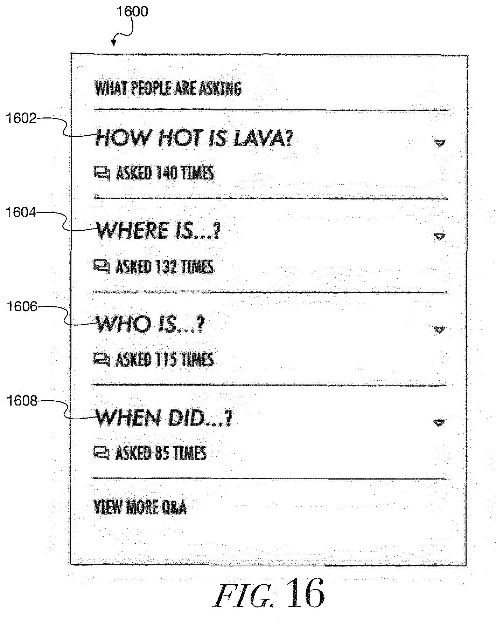

In some embodiments, the interface(s) can include an interface that includes a listing of frequently asked questions about one or more aspects of the story. For example, referring to **FIGs. 14-16****,** computing system **112** can generate data describing interfaces **1400, 1500,** and/or **1600.** Interface **1400** can include elements **1402, 1406,** and **1408,** which can comprise a listing of frequently asked questions about one or more aspects of the story described by the label of element **304.** Similarly, interface **1500** can include elements **1502, 1506, 1510,** and **1512,** which can comprise a listing of frequently asked questions about one or more aspects of the story described by the label of element **304;** and interface **1600** can include elements **1602, 1604, 1606,** and **1608,** which can comprise a listing of frequently asked questions about one or more aspects of the story described by the label of element **304.**

In some embodiments, the interface(s) can include: a question from such a listing, and a snippet that includes one or more portions, of a media-content item, that answer the question. For example, element **1402** can include a question, and element **1404** can include a snippet that includes one or more portions, of a media-content item, that answer the question included in element **1402.** Similarly, element **1502** can include a question, and element **1504** can include a snippet that includes one or more portions, of a media-content item, that answer the question included in element **1502;** and element **1506** can include a question, and element **1508** can include a snippet that includes one or more portions, of a media-content item, that answer the question included in element **1506.**

In some embodiments, computing system **112** can identify, from amongst a plurality of different historical search queries by users (e.g., queries previously processed by computing system **112,** and/or the like), one or more questions to include in such a listing, one or more portions of one or more media-content items (e.g., from which to identify one or more relevant snippets, and/or the like) identified by such queries, and/or the like. In some of such embodiments, computing system **112** can identify such question(s) based at least in part on a frequency with which the question(s) appear within the plurality of different historical search queries, an amount of time since the question(s) have appeared within the plurality of different historical search queries, and/or the like.

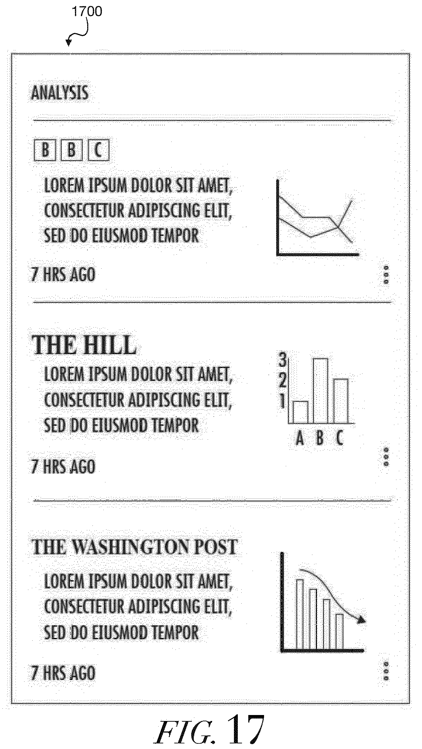

In some embodiments, the interface(s) can include an interface that depicts media-content items providing analysis associated with the story described by the label of element **304.** Such media content items can be identified, for example, using one or more machine learning (ML) models configured to identify various types of media-content items (e.g., analysis, factual reporting, opinion, commentary, and/or the like) based at least in part on their content, source, utilization, and/or the like. For example, referring to **FIG. 17****,** computing system **112** can generate data describing interface **1700.**

In some embodiments, computing system **112** can select at least two media-content items that include editorial content, at least one of which can include an opinion about an aspect of the story that differs from an opinion included in another of the selected media-content items that include editorial content. In some of such embodiments, such media-content items can be identified based at least in part on analysis (e.g., utilizing one or more machine learning (ML) models, and/or the like) of their content, authors, sources, social-media reaction, interrelationship via other media-content items, and/or the like.

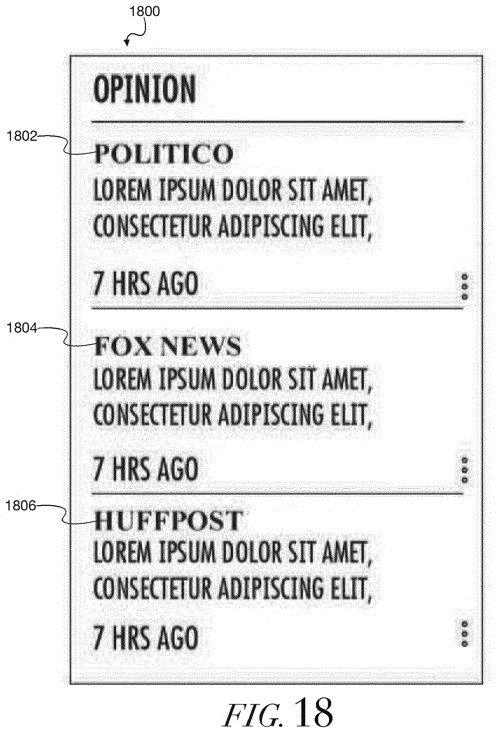

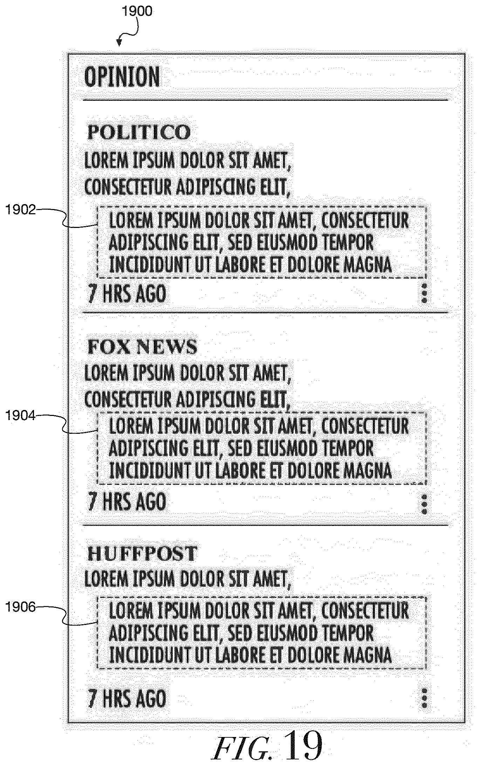

Referring to **FIG. 18****,** computing system **112** can generate data describing interface **1800.** As illustrated, interface **1800** can include elements **1802, 1804,** and **1806,** each of which can correspond to different media-content items that include editorial content including differing opinions about an aspect of the story described by the label of element **304.** In some embodiments, the interface(s) can depict one or more snippets reflecting the various differing opinions. For example, referring to **FIG. 19****,** computing system **112** can generate data describing interface **1900,** which can include elements **1902, 1904,** and **1906,** depicting snippets reflecting the various differing opinions of the media-content items corresponding to elements **1802, 1804,** and **1806.** In some embodiments, computing system **112** can identify, based at least in part on markup included in such media-content item(s) by their publisher(s), one or more portions of the media-content item(s) to include in such snippet(s). In some embodiments, computing system **112** can utilize one or more NLU algorithms to identify such portion(s), determine such portion(s) comprise opinion, determine such portion(s) comprise content that is skewed in opinion relative to one or more other portions of such content (e.g., based at least in part on a metric indicating the opinion markedly differs from other opinions related to the story with respect to volume of media-content items including, referencing, and/or the like such opinion, social-media reaction to such opinion, and/or the like), determine whether such opinion is positive or negative, and/or the like.

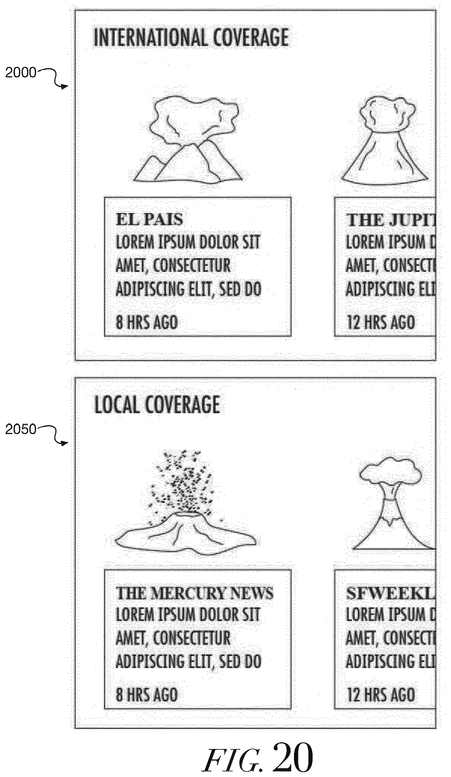

In some embodiments, the interface(s) can include an interface that includes portions depicting various regional-levels of coverage. For example, referring to **FIG. 20****,** computing system **112** can generate data describing interface **2000,** depicting international coverage, and interface **2050,** depicting local coverage. In some of such embodiments, such various regional-levels of coverage can be determined based at least in part on a geographic location associated with the story (e.g., the setting of the underlying events, and/or the like), a geographic location associated with computing device **10,** a user thereof, and/or the like.

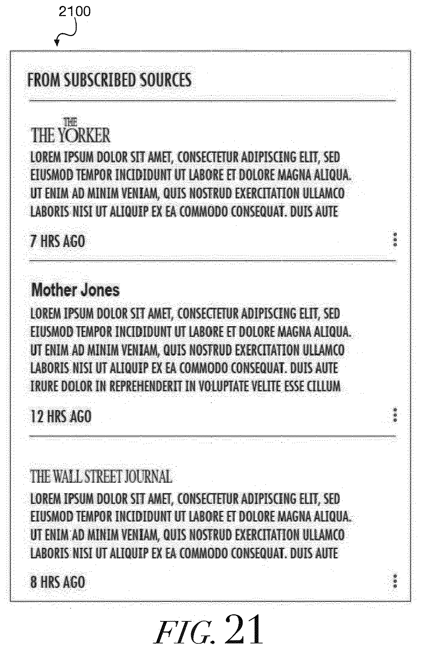

In some embodiments, the interface(s) can include an interface that includes media content items from one or subscribed sources (e.g., one or more media-content-item providers with which computing device **10,** a user thereof, and/or the like has a preexisting relationship, and/or the like). For example, referring to **FIG. 21****,** computing system **112** can generate data describing interface **2100.**

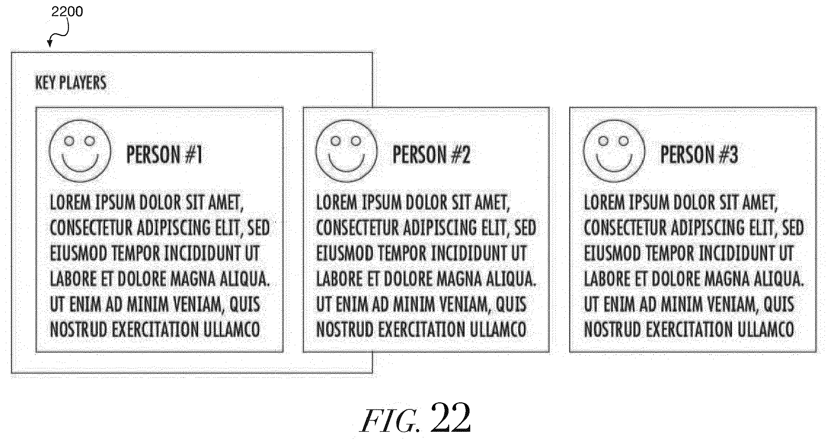

In some embodiments, the interface(s) can include an interface that depicts content (e.g., social-media content, and/or the like) associated with individuals, organizations, and/or the like that are associated with the story described by the label of element **304.** For example, referring to **FIG. 22****,** computing system **112** can generate data describing interface **2200.** In some embodiments, such individuals, organizations, and/or the like can be identified, determined, and/or the like based at least in part on analysis of the content of one or more assocaited media-content items (e.g., frequency of mentions included therein, and/or the like). Additionally or alternatively, such individuals, organizations, and/or the like can be identified, determined, and/or the like using one or more particular data structures (e.g., one or more knowledge graphs, and/or the like), one or more machine learning (ML) models, and/or the like.

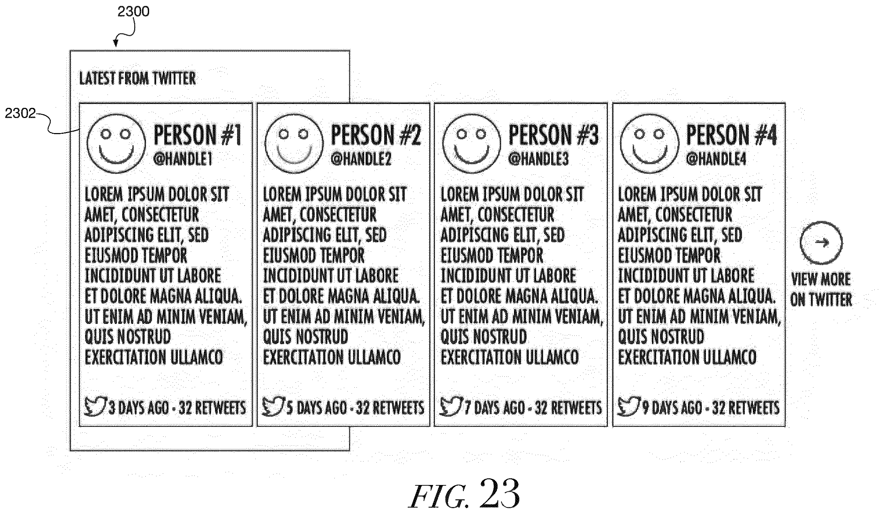

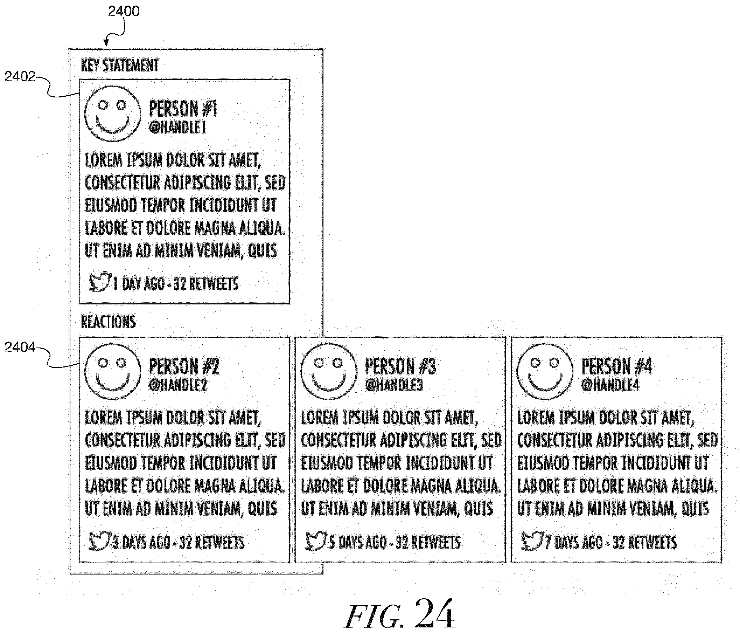

In some embodiments, computing system **112** can select one or more items of social-media content. In some of such embodiments, the interface(s) can include an interface that includes the item(s) of social-media content. For example, referring to **FIGs. 23** and **24****,** computing system **112** can generate data describing interfaces **2300** and/or **2400.** Interface **2300** can include element **2302,** which can include one or more items of social-media content (e.g., tweets, and/or the like). Similarly, interface **2400** can include elements **2402** and **2404,** which can include one or more items of social-media content. Element **2402** can include an item of social-media content comprising a statement that is an aspect of the story described by the label of element **304.** In some embodiments, computing system **112** can select the item of social-media content comprising the statement based at least in part on a number of times the item and/or the statement are cited by, referenced by, incorporated into, and/or the like the plurality of different media-content items. Element **2404** can include one or more items of social-media content comprising one or more reactions to an aspect of the story, commentary on an aspect of the story, and/or the like.

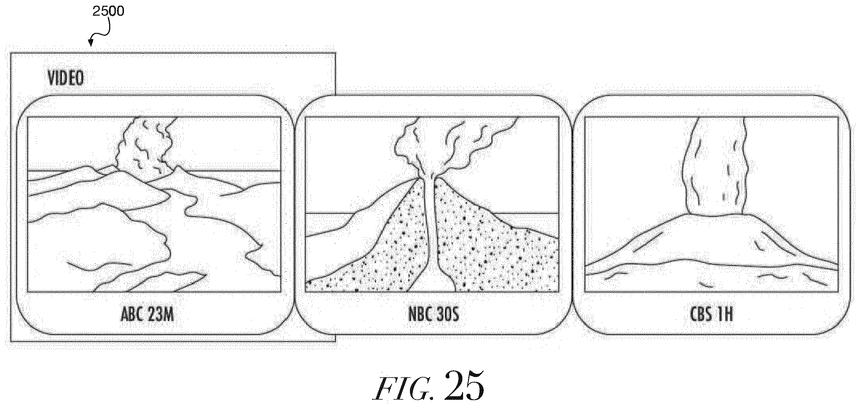

In some embodiments, the interface(s) can include an interface that depicts audio, video, and/or the like, media-content associated with the story described by the label of element **304.** For example, referring to **FIG. 25****,** computing system **112** can generate data describing interface **2500.**

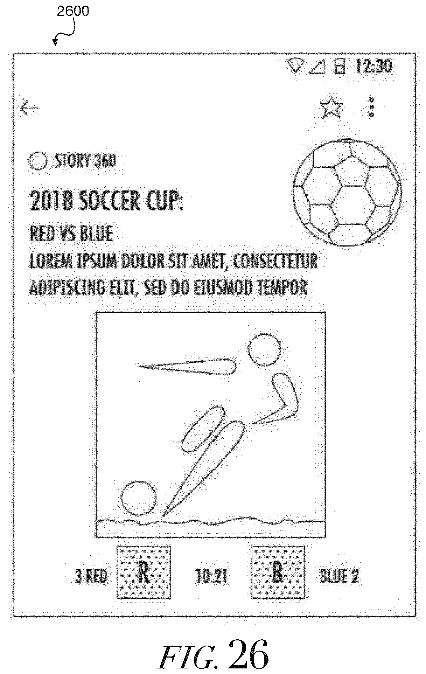

In some embodiments, the interface(s) can include an interface that depicts live content (e.g., video, scores, stock quotes, and/or the like) associated with the story described by the label of element **304.** For example, referring to **FIG. 26****,** computing system **112** can generate data describing interface **2600.**

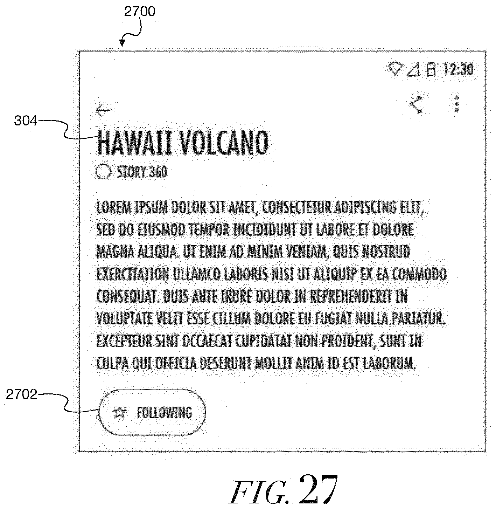

In some embodiments, the interface(s) can include an interface that includes a user-invokable option for requesting media-content items regarding subsequent updates to the story. For example, referring to **FIG. 27****,** computing system **112** can generate data describing interface **2700.** Interface **2700** can include element **2702,** which can comprise a user-invokable option for requesting media-content items regarding subsequent updates to the story described by the label of element **304.**

Returning to **FIG. 2B****,** at (**226**), computing system **112** can communicate the data describing the interface(s) (e.g., one or more of interfaces **400, 500, 600, 700, 800, 850, 900, 1000, 1100, 1200, 1300, 1400, 1500, 1600, 1700, 1800, 1900, 2000, 2050, 2100, 2200, 2300, 2400, 2500, 2600, 2700,** and/or the like) to computing device **10,** which can receive the data describing the interface(s) and can utilize such data to render (e.g., for display, and/or the like) the interface(s) for presentation (e.g., of the multiple different media-content item(s), and/or the like) to the consumer. For example, the data describing the interface(s) can be or include instructions for rendering the interface(s) on a display of computing device **10,** and/or the like.

At (**228**), computing device **10** can communicate data indicating invocation of a user-invokable option for requesting media-content items regarding subsequent updates to the story to computing system **112,** which can receive the data indicating invocation of the user-invokable option. For example, the consumer utilizing computing device **10** can invoke the user-invokable option of element **2702,** and computing device **10** can communicate data indicating invocation of the user-invokable option of element **2702** to computing system **112,** which can receive such data.

At (**230**), computing system **112** can identify one or more media-content items regarding one or more subsequent updates to the story. At (**232**), computing system **112** can select, from amongst the media-content item(s) regarding the subsequent update(s) to the story, one or more media-content items for presentation to the consumer utilizing computing device **10.** In some embodiments, such identification, selection, and/or the like can be based at least in part on one or more machine learning (ML) models (e.g., trained, retrained, and/or the like to identify content personalized for the user, story, and/or the like).

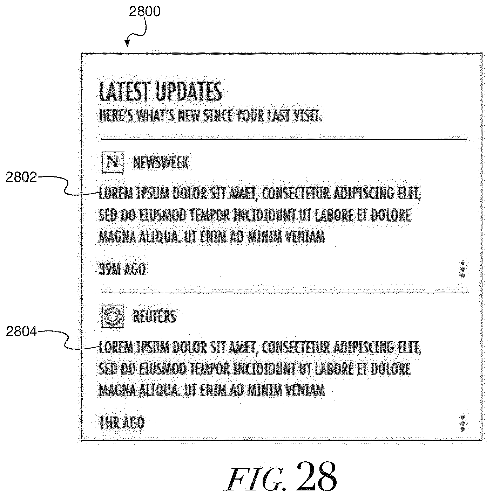

At (**234**), computing system **112** can generate data describing one or more interfaces comprising at least a portion of one or more of the media-content item(s) selected for presentation. For example, referring to **FIG. 28****,** computing system **112** can generate data describing interface **2800.** Interface **2800** can include elements **2802** and **2804,** each of which can depict at least a portion of a media-content item of the media-content item(s) selected for presentation.

Returning to **FIG. 2B****,** at (**236**), computing system **112** can communicate the data describing the interface(s) (e.g., interface **2800,** and/or the like) to computing device **10,** which can receive the data describing the interface(s) and can utilize such data to render (e.g., for display, and/or the like) the interface(s) for presentation (e.g., of the media-content item(s) selected for presentation, and/or the like) to the consumer. For example, the data describing the interface(s) can be or include instructions for rendering the interface(s) on a display of computing device **10,** and/or the like.

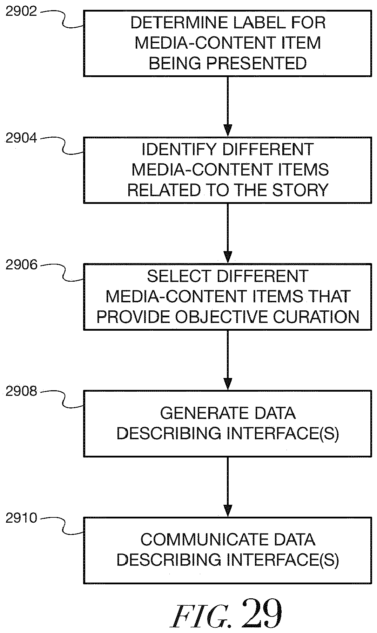

**FIG. 29** depicts an example method according to example embodiments of the present disclosure.

Referring to **FIG. 29****,** at (**2902**), a label can be determined for a media-content item at least a portion of which is being presented by a user device. For example, computing system **112** can determine the label of element **304.**

At (**2904**), a plurality of different media-content items related to the story can be identified. For example, computing system **112** can identify, from amongst the various media-content items represented by the data communicated at (**202**), a plurality of different media-content items related to a story described by the label of element **304.**

At (**2906**), multiple different media-content items that provide an objective curation of diverse content related to the story can be selected from amongst the plurality of different media-content items. For example, computing system **112** can select, from amongst the plurality of different media-content items related to the story described by the label of element **304,** one or more of the media-content items for which one or more portions of which are included in one or more of interfaces **400, 500, 600, 700, 800, 850, 900, 1000, 1100,1200,1300,1400,1500,1600,1700,1800,1900, 2000, 2050, 2100, 2200, 2300, 2400, 2500, 2600,** and/or **2700.**

At (**2908**), data describing one or more interfaces comprising at least a portion of each of the multiple different media-content items can be generated. For example, computing system **112** can generate data describing one or more of interfaces **400, 500, 600, 700, 800, 850, 900, 1000, 1100, 1200, 1300, 1400, 1500, 1600, 1700, 1800, 1900, 2000, 2050, 2100, 2200, 2300, 2400, 2500, 2600,** and/or **2700.**

At (**2910**), the data describing the interface(s) can be communicated to the user device. For example, computing system **112** can communicate the data describing interface(s) **400, 500, 600, 700, 800, 850, 900, 1000, 1100, 1200, 1300, 1400, 1500, 1600, 1700, 1800, 1900, 2000, 2050, 2100, 2200, 2300, 2400, 2500, 2600,** and/or **2700** to computing device **10.**

The technology discussed herein makes reference to servers, databases, software applications, and/or other computer-based systems, as well as actions taken and information sent to and/or from such systems. The inherent flexibility of computer-based systems allows for a great variety of possible configurations, combinations, and/or divisions of tasks and/or functionality between and/or among components. For instance, processes discussed herein can be implemented using a single device or component and/or multiple devices or components working in combination. Databases and/or applications can be implemented on a single system and/or distributed across multiple systems. Distributed components can operate sequentially and/or in parallel.

Various connections between elements are discussed in the above description. These connections are general and, unless specified otherwise, can be direct and/or indirect, wired and/or wireless. In this respect, the specification is not intended to be limiting.

The depicted and/or described steps are merely illustrative and can be omitted, combined, and/or performed in an order other than that depicted and/or described; the numbering of depicted steps is merely for ease of reference and does not imply any particular ordering is necessary or preferred.

The functions and/or steps described herein can be embodied in computer-usable data and/or computer-executable instructions, executed by one or more computers and/or other devices to perform one or more functions described herein. Generally, such data and/or instructions include routines, programs, objects, components, data structures, or the like that perform particular tasks and/or implement particular data types when executed by one or more processors in a computer and/or other data-processing device. The computer-executable instructions can be stored on a computer-readable medium such as a hard disk, optical disk, removable storage media, solid-state memory, read-only memory (RAM), or the like. As will be appreciated, the functionality of such instructions can be combined and/or distributed as desired. In addition, the functionality can be embodied in whole or in part in firmware and/or hardware equivalents, such as integrated circuits, application-specific integrated circuits (ASICs), field-programmable gate arrays (FPGAs), or the like. Particular data structures can be used to more effectively implement one or more aspects of the disclosure, and such data structures are contemplated to be within the scope of computer-executable instructions and/or computer-usable data described herein.

Although not required, one of ordinary skill in the art will appreciate that various aspects described herein can be embodied as a method, system, apparatus, and/or one or more computer-readable media storing computer-executable instructions. Accordingly, aspects can take the form of an entirely hardware embodiment, an entirely software embodiment, an entirely firmware embodiment, and/or an embodiment combining software, hardware, and/or firmware aspects in any combination.

As described herein, the various methods and acts can be operative across one or more computing devices and/or networks. The functionality can be distributed in any manner or can be located in a single computing device (e.g., server, client computer, user device, or the like).

Aspects of the disclosure have been described in terms of illustrative embodiments thereof. Numerous other embodiments, modifications, and/or variations within the scope and spirit of the appended claims can occur to persons of ordinary skill in the art from a review of this disclosure. For example, one or ordinary skill in the art can appreciate that the steps depicted and/or described can be performed in other than the recited order and/or that one or more illustrated steps can be optional and/or combined. Any and all features in the following claims can be combined and/or rearranged in any way possible.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and/or equivalents to such embodiments. Accordingly, the subject disclosure does not preclude inclusion of such modifications, variations, and/or additions to the present subject matter as would be readily apparent to one of ordinary skill in the art. For instance, features illustrated and/or described as part of one embodiment can be used with another embodiment to yield a still further embodiment. Thus, it is intended that the present disclosure cover such alterations, variations, and/or equivalents.

## Claims

1. A computer-implemented method comprising:
determining, by one or more computing devices, a label for a media-content item at least a portion of which is being presented by a user device, the label describing a story that is a subject of the media-content item;
identifying, by the one or more computing devices, a plurality of different media-content items related to the story;
selecting, by the one or more computing devices and from amongst the plurality of different media-content items, multiple different media-content items that provide an objective curation of diverse content related to the story, the multiple different media-content items comprising a plurality of different types of content and a plurality of different types of media;
generating, by the one or more computing devices, data describing one or more interfaces comprising at least a portion of each of the multiple different media-content items; and
communicating, by the one or more computing devices and to the user device, the data describing the one or more interfaces.

2. The computer-implemented method of claim 1, comprising:
communicating, by the one or more computing devices and to the user device, data describing an interface comprising:
at least a portion of the media-content item, and
a user-invokable option for requesting the objective curation of diverse content related to the story;
receiving, by the one or more computing devices and from the user device, data indicating invocation of the user-invokable option; and
responsive to receiving the data indicating invocation of the user-invokable option:
generating the data describing the one or more interfaces; and
communicating the data describing the one or more interfaces,
optionally wherein the interface comprises the label for the media-content item.

3. The computer-implemented method of any preceding claim, wherein the plurality of different types of content comprise one or more of factual content, analytical content, editorial content, or primary-source content, and/or
wherein the plurality of different types of media comprise one or more written articles, audio segments, video segments, online-blog entries, or portions of social-media content..

4. The computer-implemented method of any preceding claim, wherein determining the label for the media-content item comprises utilizing one or more natural language understanding (NLU) algorithms to determine the label for the media-content item, and/or
wherein determining the label for the media-content item comprises:
aggregating, from amongst a plurality of different historical search queries by users, queries that map to media-content items included in the plurality of different media-content items related to the story; and
determining, based at least in part on one or more terms included in the queries that map to the media-content items, the label for the media-content item, and/or
wherein determining the label for the media-content item comprises:
processing the plurality of different media-content items related to the story to identify one or more generic sentences included in multiple of the plurality of different media-content items; and
determining, based at least in part on one or more terms included in the
one or more generic sentences, the label for the media-content item.

5. The computer-implemented method of any preceding claim, wherein generating the data describing the one or more interfaces comprises generating data describing an interface that depicts a timeline comprising portions of one or more media-content items that are related to the subject of the media-content item and provide historical background for the story.

6. The computer-implemented method of claim 5, wherein:
the historical background comprises a plurality of different events;
the timeline comprises a plurality of milestones;
each milestone of the plurality of milestones corresponds to a different event of the plurality of different events; and
the method comprises, for each event of the plurality of different events, determining, by the one or more computing devices, to include a milestone for the event in the timeline based at least in part on:
a metric indicating an importance of the event to the historical background, and
a metric indicating relevance of the event to the story.

7. The computer-implemented method of claim 6, wherein:
the method comprises, for each event of one or more events of the plurality of different events, determining, by the one or more computing devices and based at least in part on one or more of the metric indicating the importance of the event or the metric indicating the relevance of the event, that the event is unimportant relative to one or more other events of the plurality of different events; and
the timeline comprises a collapsed portion comprising one or more milestones corresponding to the one or more events, the collapsed portion being configured to expand to depict the one or more milestones in response to user input, or
wherein the method comprises, for each event of one or more events of the plurality of different events:
determining, by the one or more computing devices and based at least in part on one or more of the metric indicating the importance of the event or the metric indicating the relevance of the event, an importance of the event relative to one or more other events of the plurality of different events; and
determining, by the one or more computing devices, based at least in part on the importance of the event, and in order to distinguish the event from the one or more other events, one or more of:
a type of media for a media-content item at least a portion of which is included in the timeline for the event; or
a prominence of one or more aspects of a media-content item at least a portion of which is included in the timeline for the event.

8. The computer-implemented method of claim 1, wherein selecting the multiple different media-content items comprises selecting at least two media-content items comprising editorial content, a first media-content item of the at least two media-content items including an opinion about an aspect of the story, and a second media-content item including a different opinion about an aspect of the story.

9. The computer-implemented method of claim 8, wherein generating the data describing the one or more interfaces comprises generating data describing an interface that depicts:
a snippet of the first media-content item reflecting the opinion; and
a snippet of the second media-content item reflecting the different opinion, optionally:
the method further comprising identifying, by the one or more computing devices and based at least in part on markup in the first media-content item by one or more publishers, one or more portions of the first media-content item to include in the snippet of the first media-content item, and/or
wherein the snippet of the first media-content item includes one or more portions of the first media-content item; and
the method comprises utilizing, by the one or more computing devices, one or more natural language understanding (NLU) algorithms to one or more of:
identify the one or more portions;
determine the one or more portions comprise opinion;
determine the one or more portions comprise content that is skewed in opinion relative to one or more other portions of the first media-content item; or
determine whether the opinion is positive or negative.

10. The computer-implemented method of claim 1, wherein selecting the multiple different media-content items comprises selecting one or more items of social-media content.

11. The computer-implemented method of claim 10, wherein at least one item of the one or more items of social-media content comprises a statement that is an aspect of the story, optionally wherein selecting the one or more items of social-media content comprises selecting the at least one item based at least in part on a number of times one or more of the at least one item or the statement are one or more of cited by, referenced by, or incorporated into the plurality of different media-content items.

12. The computer-implemented method of claim 10, wherein at least one item of the one or more items of social-media content comprises one or more of:
a reaction to an aspect of the story, or
commentary on an aspect of the story.

13. The computer-implemented method of claim 1, wherein generating the data describing the one or more interfaces comprises generating data describing an interface that includes a listing of frequently asked questions about one or more aspects of the story, optionally wherein generating the data describing the one or more interfaces comprises generating data describing an interface that includes:
a question from the listing; and
a snippet that includes one or more portions, of a media-content item, that answer the question.

14. The computer-implemented method of claim 13, comprising identifying, by the one or more computing devices and from amongst a plurality of different historical search queries by users, one or more questions to include in the listing, optionally wherein identifying the one or more questions comprises identifying the one or more questions based at least in part on one or more of:
a frequency with which the one or more questions appear within the plurality of different historical search queries; or
an amount of time since the one or more questions have appeared within the plurality of different historical search queries.

15. The computer-implemented method of claim 1, wherein generating the data describing the one or more interfaces comprises generating data describing an interface that includes a user-invokable option for requesting media-content items regarding subsequent updates to the story, the method optionally further comprising:
receiving, by the one or more computing devices and from the user device, data indicating invocation of the user-invokable option; and
responsive to receiving the data indicating invocation of the user-invokable option:
identifying, by the one or more computing devices, at least one media-content item regarding a subsequent update to the story;
generating, by the one or more computing devices, data describing one or more interfaces comprising at least a portion of the at least one media-content item; and
communicating, by the one or more computing devices and to the user device, the data describing the one or more interfaces comprising the at least a portion of the at least one media-content item.
